(19) Europäisches Patentamt
European Patent Office
Office européen des brevets

(11) EP 4 501 584 A1

(12) EUROPEAN PATENT APPLICATION

(43) Date of publication:
**05.02.2025 Bulletin 2025/06**

(21) Application number: **23189782.8**

(22) Date of filing: **04.08.2023**

(51) International Patent Classification (IPC):
***B29C 48/92*** *(2019.01)*

(52) Cooperative Patent Classification (CPC):
(C-Sets available)
**B29C 48/92;** C08L 2205/06 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ingenia Polymers International S.A.**
**2520 Luxenbourg (LU)**

(72) Inventors:
- **Schneider, Alyssa**
  **Hamilton, L8R 1X3 (CA)**
- **Arefi, Ahmad**
  **Hamilton, L8S 1A9 (CA)**
- **Charlton, J. Zachariah**
  **Burlington, N3T 5M2 (CA)**
- **Giammaria, Paul Marco**
  **Hamilton, L9C 2L1 (CA)**
- **Tzoganakis, Costas**
  **Waterloo, N2V 2S6 (CA)**

(74) Representative: **Tomkins & Co**
**5 Dartmouth Road**
**Dublin 6, D06 F9C7 (IE)**

(54) **POLY(VINYL ESTER) POLYMER PROCESSING AIDS FOR POLYOLEFINS**

(57) The present invention relates to polymer processing aid compositions for polyolefins, their methods of manufacture and articles made from the compositions as well as use of the compositions for the removal or reduction of sharkskin melt fracture or reduction in the formation of die lip build-up. Compositions of the present invention may also be substantially free of fluorine and in some embodiments substantially free of siloxane.

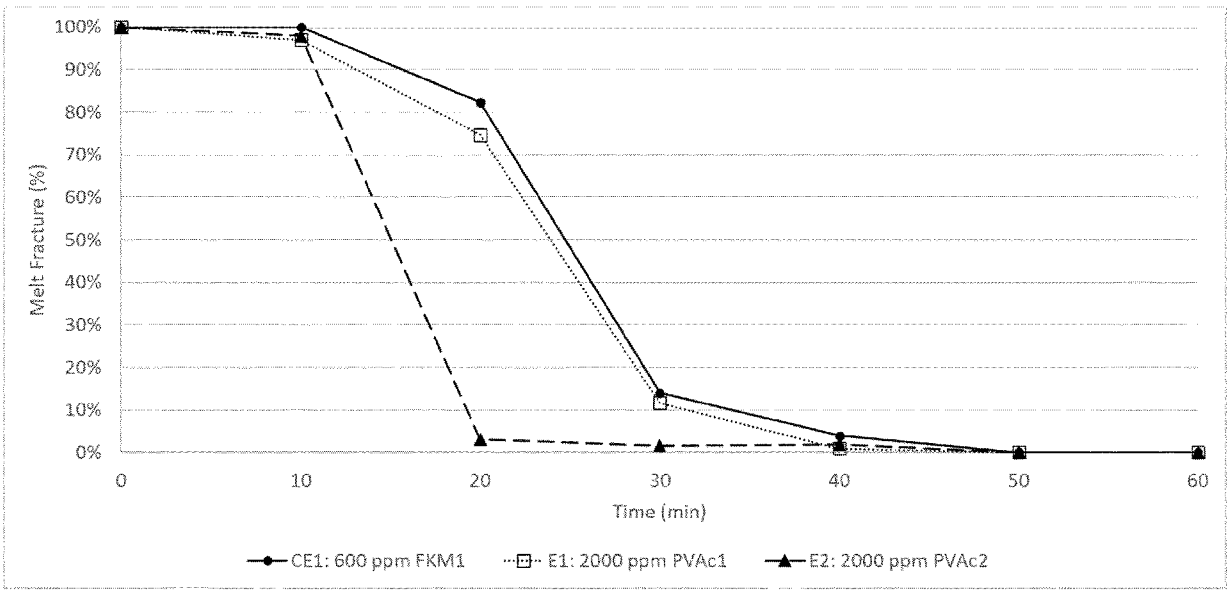


Fig. 1

EP 4 501 584 A1

(52) Cooperative Patent Classification (CPC): (Cont.)

C-Sets
**C08L 23/0815, C08L 29/04;**
**C08L 23/0815, C08L 31/04;**
**C08L 23/0815, C08L 31/04, C08L 67/04**

## Description

## Technical Field

The present invention relates to the application of poly(vinyl ester) as a polymer processing aid (PPA) in thermoplastic extrusion, including polyolefin film extrusion.

## Background

Industrial polyolefin melt processes - including blown film, cast film, sheet extrusion, profile extrusion, blow molding, wire and cable extrusion coating, and fibre spinning - desire high throughputs in order to reduce costs associated with such processing. However, elevating polyolefin extrusion rates above a critical wall shear stress can lead to the onset of flow instabilities which manifest themselves as distortions of the extruded product. Hatzikiriakos, S. G., & Migler, K. B. (2012), Polymer Processing Additives for Melt Fracture Control in "Applied Polymer Rheology: Polymeric Fluids with Industrial Applications", First Edition, pp 29-58, describes a range of melt extrusion instabilities observed in industry. Above a critical volumetric flow rate, polyolefin extrusions exhibit distortions which increase in severity as the flow rate increases. These distortions are collectively referred to as *"melt fracture".* Above a first critical shear stress the polyolefin extrudate exhibits *"surface melt fracture",* also called *"sharkskin".* Sharkskin appears as a regular pattern of surface roughness causing haze which is undesirable and limits the rate of extrusion. Extrusion at still higher rates can lead to a stick-slip instability or *"oscillating melt fracture".* Extrusion at even higher rates leads to gross, irregular distortions in the extrudate known as *"gross melt fracture".*

*"Polymer Processing Aids"* ("PPAs") are well known to those skilled in the art of polyolefin extrusion and film processing. The addition of low concentrations of PPAs to the polyolefin melt increases the critical shear stress at which sharkskin occurs, allowing for higher throughput rates without the onset of sharkskin. Heretofore, fluoroelastomers and fluoroplastics (collectively "fluoropolymers") have been the established PPA solution to sharkskin in polyolefin extrusion processes.

US Patent No. 3,125,547 discloses compositions of 0.005 to 2 wt.-% fluoropolymer in polyolefins. The compositions are effective in removing sharkskin from film and tube extrusions as compared to extrusions of the same polyolefins absent the fluoropolymer.

US Patent No. 4,855,360 discloses polyolefin compositions containing minor amounts of fluoropolymers in combination with a poly(oxyalkylene) polymer. Preferred poly(oxyalkylene) polymers disclosed are polyethylene glycols (PEG; CAS#: 25322-68-3) with a molecular weight of 1,000 to 20,000 g/mol. Such compositions show a synergistic effect of the poly(oxyalkylene) with the fluoropolymers of the invention. The examples of that document demonstrate that the combination of fluoropolymer and PEG shift the onset of melt fracture to higher shear rates than for fluoropolymer or PEG alone, reduce the time to remove melt fracture in blown film processing at a given apparent shear rate and reduce the pressure drop across the blown film die. The compositions allow lower use of fluoropolymer with poly(oxyalkylene) as compared to the use of fluoropolymer alone.

US Patent No. 6,642,310 discloses improved PPA efficiency through the use of dispersed fluoropolymer particles of a minimum particle size of 2 micron and the use of interfacial agents to help achieve the target particle size. Silicone-polyether, aromatic polyester and aliphatic polyesters including polylactic acid (PLA) and polycaprolactone (PCL; CAS#: 24980-41-4), among other materials are disclosed as useful interfacial agents. The use of PCL as an interfacial agent with improved temperature resistance, compared to poly(oxyalkylene), is disclosed.

Fluoropolymer PPAs, often formulated in combination with a synergist, are effective at low concentrations. In addition to delaying the onset of sharkskin to higher extrusion rates, such compositions can reduce extrusion pressure and extruder torque at a given output and can help reduce die lip build up (also called die drool). However, the use of fluoropolymers as polymer processing aids is now undesirable due to regulatory and market developments requiring the removal of per- and poly-fluoroalkyl substances ("PFAS") from polyolefins. Thus, there is a need for a fluorine-free alternative PPA to eliminate sharkskin melt fracture.

US Patent No. 4,535,113 discloses a composition of a polyolefin and a silicone additive. The silicone additive is a poly(dimethyl siloxane) ("PDMS") copolymer where the comonomer consists of a siloxane substituted with at least one pendant ethylene oxide, vicinal epoxy or amino group in a concentration sufficient to improve optical or mechanical properties. The compositions are shown to reduce melt fracture and pin striping where the silicone additive is present at 0.05% of the composition.

US Patent No. 5,789,473 discloses a polyolefin composition containing 0.01 to 1 wt.-% of a hydroxy-functional di-organosiloxane having a molecular weight of at least 40,000 g/mol. The formulations of that patent are shown to reduce surface roughness of a film produced on a slit die as compared to controls not containing PPA additives and compared to conventional fluoroelastomer PPAs.

Silicones and poly(dialkyl siloxane) copolymers are effective alternatives to fluoropolymers as PPAs for the

removal or delay of melt fracture in polyolefins. However, some applications now require siloxane free alternatives. Thus, there is a need for a fluorine-free, siloxane-free alternative PPA to eliminate sharkskin melt fracture.

US Patent No. 10,982,079 B2 discloses the use of a poly(oxyalkylene) polymer with a molecular weight of at least 50,000 g/mol., optionally with a second poly(oxyalkylene) polymer of up to 20,000 g/mol., molecular weight and a metal salt of carbonylic acid, sulfonic acid, or alkylsulfate. The use of certain metal salts is demonstrated to improve the thermal stability of the poly(oxylalkylene) polymers. Examples demonstrate that high molecular weight PEG with zinc stearate in a concentration range of 300 to 1200 ppm in polyethylene are effective in clearing melt fracture. The inclusion of a second, lower molecular weight PEG improves performance. The disclosed formulations are not as effective in clearing melt fracture as fluoropolymer PPAs. The effect of the PEG on the specific output of the extruder (output/RPM) and properties of the films is not disclosed.

US Patent application 2023/003100 A1 discloses the use of 200 to 10,000 ppm of a combination of sorbitan ester or polysorbate with either or both of a metal salt of a fatty acid and PEG having a molecular weight of less than 40,000 g/mol as a PPA for polyolefins. Examples disclose the use of combinations of polysorbate 60 with either of both of zinc stearate and PEG having a molecular weight of 8,000 g/mol and demonstrate their performance in blown film time-to-clear studies. The inventors disclose that output rates vary by 30% or less and do not disclose the effect of the formulations on the specific output of the extruder or extrusion stability.

The foregoing disclosures suggest that PEG, stearates and polysorbates can be effective in removing sharkskin. However, the use of stearates is known to contribute to die lip buildup and may affect printing on polyolefin films when used at high levels. High levels of PEG may also contribute to die-lip buildup and printing issues.

Thus, there is a need for a substantially fluorine-free, siloxane-free, alternative PPA to eliminate sharkskin melt fracture. There is a further need for such a PPA to minimize any reduction in extruder output due to slippage or surging of the extrusion screw. Ideally, such a PPA will increase specific output of the extruder due to pressure reduction on the die without causing screw slippage. There is a further need for such a PPA to minimize the formation of die-lip buildup in extrusion processes and to have minimal negative effects on physical properties of films including printability.

## Object of the Invention

Regulatory and market developments require an alternative to fluoropolymer and silicone PPAs. There is a requirement for a substantially fluorine -free, siloxane-free polymer processing aid for polyolefins which can delay the onset of sharkskin melt fracture to higher extrusion rates. There is also a requirement for PPAs to reduce the formation of die lip build-up. There is a further need for such non-fluorinated PPA to be effective at low concentrations. In food contact applications it is also required for the PPA to be compliant with food contact regulations in the jurisdictions in which it is sold. The PPAs of the present invention meet one or more of these objectives.

## Summary of the Invention

The present invention relates to polymer processing aid compositions for polyolefins, their methods of manufacture and articles made from the compositions as well as use of the compositions for the removal or reduction of sharkskin melt fracture, or reduction in the formation of die lip build-up. Compositions of the present invention are also substantially free of fluorine and in some embodiments substantially free of siloxane.

The invention provides use of poly(vinyl ester) or vinyl ester copolymer as a polymer processing aid to remove or reduce sharkskin melt fracture formation, or reduce the formation of die lip buildup, in a polyolefin composition, wherein the polymer processing aid is used in an amount of from 0.01 to 1.0 weight-%, based on the total weight of the polyolefin composition. Suitably the poly(vinyl ester) or vinyl ester copolymer may be used in an amount of from 0.01 to 0.7 weight-%, preferably in an amount of from 0.02 to 0.5 weight-% and more preferably in an amount from 0.02 to 0.2 weight-% based on the total weight of the polyolefin composition.

In another aspect the invention provides a method for removing or reducing sharkskin formation, or reducing the formation of die lip buildup, in a polyolefin extrusion process comprising using a poly(vinyl ester) or vinyl ester copolymer as a polymer processing aid wherein the polymer processing aid is used in an amount of from 0.01 to 1.0 weight-%, based on the total weight of the polyolefin composition. Suitably the poly(vinyl ester) or vinyl ester copolymer may be used in an amount of from 0.01 to 0.7 weight-%, preferably in an amount of from 0.02 to 0.5 weight-% and more preferably in an amount from 0.02 to 0.2 weight-% based on the total weight of the polyolefin composition.

In yet another aspect the invention provides a composition comprising a polyolefin; and from 0.01 to 1.0 weight-% (of the total composition) of a polymer processing aid, wherein the polymer processing aid comprises a poly(vinyl ester) or vinyl ester copolymer. Suitably the poly(vinyl ester) or vinyl ester copolymer may be present in an amount of from 0.01 to 0.7 weight-% based on the total weight of the polyolefin composition. Preferably the poly(vinyl ester) or vinyl ester copolymer may be present in an amount of from 0.02 to 0.5 weight-% and more preferably in an amount from 0.02 to 0.2 weight-% based on the total weight of the polyolefin composition.

Also provided is a masterbatch composition comprising a polyolefin; and from 1 to 45 weight-% (of the total composition) of a polymer processing aid, wherein the polymer processing aid comprises a poly(vinyl ester) or vinyl ester copolymer. Suitably the poly(vinyl ester) or vinyl ester copolymer may be present in an amount from 1.5 to 40 weight %, or from 2 to 30 weight %, for example from 2 to 10 weight % based on the total weight of the polyolefin composition,

The use, method or composition described above may further comprise the use of a polyester or ester copolymer as an additional component of the polymer processing aid, wherein the poly(vinyl ester) or vinyl ester copolymer, and the polyester or ester copolymer are used in a combined amount of from 0.01 to 1 weight-%, based on the total weight of the olefin composition. The polyester or ester copolymer may have a lower viscosity than the poly(vinyl ester) or vinyl ester copolymer. Viscosity of a polymer can be measured at a range of shear rates and temperatures by a capillary or rotational rheometer as is known in the art, but can be readily assessed at a single condition as measured by the Melt Flow Rate (MFR, ASTM D1238). A higher MFR indicates a lower viscosity. The polyester or ester copolymer may have a MFR that is at least 5% higher, suitably 10% higher, and preferably at least 20% higher, when measured under the same standard ASTM D1238 test conditions as the poly(vinyl ester) or vinyl ester copolymer.

In some embodiments the poly(vinyl ester) or vinyl ester copolymer-based PPA is present in an amount of about 0.01 to 1 weight-% in the polyolefin composition. Such compositions are extrudable compositions useful in polyolefin extrusion processes including blown film, cast film, sheet extrusion, profile extrusion, pipe extrusion, wire and cable extrusion, and extrusion blow moulding. They are useful in the final extrusion process to remove or delay the onset of sharkskin, and to reduce die-lip buildup or reduce pressure drop across an extrusion die. Such compositions are useful in removing sharkskin under a given shear rate condition or delaying sharkskin to higher extrusion flow rates as compared to polyolefins without the poly(vinyl ester) or vinyl ester copolymer-based PPA. In other embodiments the PPA is present in an amount of about 1 to 45 weight-% percent in a carrier polymer, from example from 1.5 to 40%, preferably 2 to 30 weight %, for example 2 to 10% wt. The higher concentration range compositions, called masterbatches, are useful as an intermediate material to prepare the final extrudable composition. Such uses are well known to those of skill in the art.

The poly(vinyl ester) or vinyl ester copolymer may have a molecular weight of greater than 1,000 g/mol. Suitably the poly(vinyl ester) or vinyl ester may have a molecular weight of greater than 5,000 g/mol, preferably greater than 10,000 g/mol, for example greater than 50,000 g/mol, or greater than 100,000 g/mol, or greater than 200,000 g/mol, or greater than 300,000 g/mol.

In some embodiments the poly(vinyl ester) or vinyl ester copolymer is poly(vinyl acetate) homopolymer ("PVAc"). Suitably the PVAc may have a molecular weight of greater than 5,000 g/mol, preferably greater than 10,000 g/mol, for example greater than 50,000 g/mol, or greater than 100,000 g/mol, or greater than 200,000 g/mol, or greater than 300,000 g/mol.

In some embodiments the poly(vinyl ester) or vinyl ester copolymer is vinyl acetate ("VA") copolymer. In some embodiments the VA copolymer may be a poly(ethylene-co-vinyl acetate) ("PEVA") copolymer containing greater than 30% by weight vinyl acetate, for example greater than 35%, or greater than 40%, or greater than 50%, or greater than 60%, or greater than 70%, or greater than 80%, or greater than 90% vinyl acetate. In other words, vinyl acetate monomeric units may make up greater than 30% (or greater than 35%, or greater than 40%, or greater than 50%, or greater than 60%, or greater than 70%, or greater than 80%, or greater than 90%) of the weight of the poly(ethylene-co-vinyl acetate) ("PEVA") copolymer, the remainder being the ethylene comonomer.

In some embodiments the polyester or ester copolymer may be a poly(lactic acid) ("PLA"). The poly(lactic acid) may comprise greater than 80% of the L-isomer of lactic acid or lactide monomer.

In some embodiments the polyester or ester copolymer may be a poly(hydroxy alkanoate) ("PHA").

The poly(vinyl ester) or vinyl ester copolymer and the polyester or ester copolymer may be present in the polymer processing aid in a weight ratio of from about 1:10 to about 10:1. Preferably the poly(vinyl ester) or vinyl ester copolymer and the polyester or ester copolymer are present at a ratio of from about 1:3 to about 10:1, more preferably at a ratio of from about 1:1 to about 8:1, and most preferably at a ratio of 1:1 to 5:1.

The polymer processing aid may be dispersed in the polyolefin composition at an average dispersed particle size of 0.2 to 30 microns, more preferably 0.5 to 20 microns, still more preferably 1 to 15 microns, and most preferably 1 to 10 microns.

Either or both the poly(vinyl ester) or vinyl ester copolymer and the polyester or ester copolymers may have a linear or a non-linear architecture. The poly(vinyl ester) or vinyl ester copolymer and the polyester or ester copolymers may be branched through the addition of a chain extender or through free radical mediated chemistry.

The polyolefin may be selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

In some embodiments the polyester or ester copolymer may be selected from the group comprising poly(lactic acid), polyhydroxyalkanoates, polyhydroxyalkanoate copolymers, poly(butylene adipate terephthalate). Preferably the polyester or polyester copolymer is poly(lactic acid), a polyhydroxyalkanoate or polyhydroxyalkanoate copolymers. The polyester or ester copolymer may be a polyhydroxyalkanoate, polyhydroxyalkanoate copolymer or a poly(butylene

adipate terephthalate).

Polyesters and ester copolymers useful in the PPAs of the present invention include aliphatic polyesters, aromatic polyesters, and copolymers of aliphatic or aromatic polyesters.

Aliphatic polyesters and aliphatic polyester copolymers suitable for use in the present invention include poly(lactic acid), poly(glycolic acid), poly(caprolactone), poly(butylene succinate), poly(butylene co-adipate), and the various poly(hydroxyalkanoates) including poly(4-hydroxybutyrate), poly(3-hdyroxyvalerate), poly(3-hydroxybutyrate), poly(3-hydroxybutyrate-co-4-hydroxybutyrate), poly(3-hydroxybutyrate-co-3-hydroxyvalerate).

Aromatic polyesters and aromatic polyester copolymers suitable for use in the present invention include poly(butylene adipate terephthalate), poly(butylene succinate-co-terephthalate) and poly(butylene terephthalate co-oxyalkylene).

A preferred polyester suitable for use in the current invention is poly(lactic acid). Preferred PLAs of the present invention have a Melt Flow Rate (ASTM D1238, 210°C, 2.16 kg) in the range of 0.1 to 150 g/10 min, for example 0.5 to 100, for example 0.5 to 80, for example 1 to 50. Preferred PLAs useful as the polyester of the present invention have a MFR in the range of 0.5 to 15.

The composition may further comprise 0.01 to 50 weight-% of the total composition of a synergist which is a poly(oxyalkylene) or a polymeric liquid phosphite antioxidant of between 1,000 and 20,000 g/mol molecular weight. The poly(oxyalkylene) may be a polyethylene glycol. The poly(oxyalkylene) may have a molecular weight of 2,000 to 10,000 grams/mole.

In some embodiments, the synergist is present at a concentration of 0.01 to 0.5 %, preferably from 0.01 to 0.2 %, such embodiments being suitable as extrudable compositions for use in polyolefin extrusion processes. In other embodiments, the synergist is present at a concentration of 1 to 50 %, preferably from 5 to 25 %, such embodiments being suitable for use as masterbatches.

The composition may further comprise from 0.01 to 10% of the total composition of boron nitride. The boron nitride preferably has a mean particle size of less than 30 microns and more preferably less than 10 microns. In some applications of the present invention, boron nitride is used at a concentration as low as 0.01 to 0.2%, preferably from 0.01 to 0.1%, such embodiments being suitable as extrudable compositions for use in polyolefin extrusion processes. In other embodiments, boron nitride is present at a concentration of 0.5 to 50%, preferably from 0.5 to 10 %, such embodiments being suitable for use as masterbatches.

A composition comprising a linear polyolefin may further comprise from 0.1 to 50% of the total composition of low-density polyethylene (LDPE). The LDPE may be present in an amount of 0.1 to 15 %, suitably from 0.1 to 5%, preferably 0.1 to 0.5 % in an extrudable composition. The LDPE may be present in an amount of 5 to 99 %, suitably 5 to 40%, preferably 10 to 35% in a masterbatch where the remainder of the carrier resin is a linear polyolefin; or the LDPE can be used as the exclusive carrier resin for the PPA masterbatch.

The invention also provides an extruded polyolefin product whenever produced using the composition or the methods described above.

The fluorine-free, siloxane-free composition of the present invention is useful in removing, reducing the occurrence, or delaying the onset of melt fracture to higher throughputs in polyolefin conversion processes including extrusion and in particular blown and cast film extrusion, profile extrusion, extrusion blow molding, and fibre spinning. The compositions are also useful in reducing extrusion pressure in various extrusion processes including blown and cast film extrusion, profile extrusion, extrusion blow molding and fibre spinning. The compositions are also useful in reducing die lip buildup in various extrusion processes.

## Detailed Description of the Invention

The invention relates to polyolefin compositions showing improved extrusion properties. The invention also relates to the methods of manufacture of the polyolefin compositions and articles made from the polyolefin compositions.

In another aspect, it relates to Polymer Processing Aids (PPAs) comprised of poly(vinyl ester) or vinyl ester copolymers used to improve the extrusion properties of polyolefin compositions. In another aspect, it relates to Polymer Processing Aids (PPAs) comprised of a blend of poly(vinyl ester) or vinyl ester copolymer with a polyester or ester copolymer used to improve the extrusion properties of polyolefin compositions. In another aspect, it relates to the use of PPAs comprised of synergists and poly(vinyl ester) or vinyl ester copolymer to improve the extrusion properties of polyolefin compositions. In another aspect, it relates to the use of PPAs comprised of boron nitride and poly(vinyl ester) or vinyl ester copolymer copolymers to improve the extrusion properties of polyolefin compositions. In a further aspect of the invention, it relates to a masterbatch useful for delivering accurate dosing of the PPA to a polyolefin composition.

The particulars of the invention shown herein are by way of example. They are meant to illustrate various embodiments of the invention and are not meant to limit the scope of the invention.

Given below are the condensed (by no means exhaustive) customary definitions known in the art, of which certain terms which may aid in the description of the invention.

'Masterbatch' is a concentrated mixture of pigments and/or additives which are encapsulated or dissolved during a heating and mixing process into a carrier polymer which is then cooled and cut into a granular shape. A masterbatch can be added to a base polymer in order to deliver the desired concentration of pigments or additives to the base polymer.

'Base Polymer' is the polymer which is to be colored, functionalized, stabilized or otherwise modified by additives or masterbatch. This may also be referred to as the 'letdown resin' by those familiar with the art.

'Carrier Polymer' is the polymer or polymer blend that, when combined with fillers, colorants or additives, will encapsulate them to form a masterbatch.

'Copolymer', is defined in the 'Compendium of Polymer Terminology and Nomenclature, IUPAC Recommendations, 2008' by RSC Publishing (hereafter referred to as the IUPAC Compendium) as a polymer derived from more than one species of monomer.

'Die-Lip Buildup', (DLBU) is the accumulation of extrudate material on the exits of an extrusion die (the 'die lips').

'Melt Flow Rate' (MFR) is as defined in ASTM D1238-20. Units of measure are in grams per 10 minutes.

'Melt Volume Rate' (MVR) is as defined in ASTM D1238-20. Units of measure are in $cm^3$ per 10 minutes.

'Polar Functional Group' means a functional group containing two atoms with an electronegativity difference on the Pauling scale of 0.4 to 1.7.

'Substantially Free' with regards to the content of a polymer or polymer additive means below the levels that would intentionally be included in a polymer composition. Substantially free may still allow for levels of unintentionally added substances. Substantially free permits trace amounts of less than 10 ppm and preferably less than 1ppm.

All percentages described in this document shall refer to the percentage on a weight basis of the total composition.

Disclosed herein is a composition of:

a. a polyolefin, and
b. from 0.01 to 1.0 weight-% (of the total composition) of a polymer processing aid, wherein the polymer processing aid comprises a poly(vinyl ester) or vinyl ester copolymer, with the proviso that when the poly(vinyl ester) or vinyl ester copolymer is a poly(ethylene-covinyl acetate) the vinyl acetate content of the copolymer is greater than 30 weight-%.

The composition may further comprise a polyester or ester copolymer.

The composition may further comprise an optional synergist selected from the list of poly(oxy alkylenes) and polymeric liquid phosphites.

The composition may further comprise boron nitride.

Also disclosed is a masterbatch composition of:

a. a polyolefin, and
b. from 1 to 45 weight-% (of the total composition) of a polymer processing aid, wherein the polymer processing aid comprises a poly(vinyl ester) or vinyl ester copolymer, with the proviso that when the poly(vinyl ester) or vinyl ester copolymer is a poly(ethylene-co-vinyl acetate) the vinyl acetate content of the copolymer is greater than 30 weight-%.

The masterbatch composition may further comprise a polyester or ester copolymer.

The masterbatch composition may further comprise an optional synergist selected from the list of poly(oxy alkylenes) and polymeric liquid phosphites.

The masterbatch composition may further comprise boron nitride.

The masterbatch composition may further comprise from 1 to 95% of additional polymer additives including the hindered phenol antioxidants, phosphite antioxidants, catalyst neutralizers including metal carboxylates, hydrotalcites or zinc oxide, anti-blocking agents, slip agents, anti-static agents, and pigments, such masterbatch compositions being useful to deliver combinations of the polymer processing aid and other polymer additives to a polyolefin extrudable composition.

**The Polyolefin**

Polyolefins suitable for use in the composition include linear or branched polyolefins. In particular, polyolefins useful in the present invention include polypropylene, high-density polyethylene, linear low-density polyethylene, medium density polyethylene, polybutene, copolymers thereof, and including ethylene vinyl acetate copolymers, acid copolymers including ethylene-methacrylic acid and ethylene-acrylic acid copolymers, and combinations thereof. Such polyolefins may be produced by any means known in the art including free radical high-pressure processes and via catalyzed processes including by chrome catalyst, Ziegler-Natta catalyst and single site catalysts including metallocene catalysts.

In some embodiments, the polyolefin may comprise a substantially linear polyolefin or alpha-olefin copolymer. Suitably, the polyolefin may comprise a substantially linear polyethylene or polyethylene copolymer with a density of

between 0.91 and 0.965 g/cm$^3$.

In some embodiments, the polyolefin comprises a linear low-density polyethylene (LLDPE) with a density of between about 0.91 and 0.925 g/cm$^3$. This may be selected from the group comprising: butene, hexene, octene, or other low (short-chain) alpha-olefin copolymers of polyethylene. Examples of such LLDPEs include LyondellBasell Petrothene GA502024 and ExxonMobil Chemical Company LL 1001X31. Narrow molecular weight distribution (Mw/Mn < 3, for example less than 2), low melt flow rate (MFR < 2 g/10 min) linear low-density polyethylene copolymers are known to be prone to sharkskin and can benefit from the use of polymer processing aid compositions of the present invention. In particular, narrow molecular weight distribution, low melt flow rate (MFR < 2g/10 min) metallocene linear low-density polyethylene copolymers are known to be especially prone to sharkskin and can benefit from the use of PPA compositions of the present invention.

In some embodiments, the polyolefin comprises a medium-density polyethylene (MDPE) with a density of between about 0.925 and 0.940 g/cm$^3$. This may be selected from the group comprising: butene, hexene, or other low alpha-olefin copolymers of polyethylene.

In some embodiments, the polyolefin comprises a high-density polyethylene (HDPE) with a density of equal to or greater than about 0.940 g/cm$^3$. This may be selected from the group comprising: butene, hexene, or other low alpha-olefin copolymers of polyethylene. It may also be a homopolymer HDPE.

In some embodiments, the polyolefin may comprise a branched low-density polyethylene (LDPE) with a density of between about 0.91 and 0.94 g/cm$^3$. LDPE is not particularly prone to sharkskin melt defects, but LDPE is often blended with linear polyolefins in compositions of the present invention. LDPEs of the present invention include LyondellBasell Petrothene NA219000.

In some embodiments, the polyolefin may be a blend of polyolefins. Blends of polyolefins may be used to impart specific properties to the finished polyolefin article. In some embodiments the polyolefin may be a blend including a lower density plastomer or elastomer component. Such lower density polyolefins may be used to impart specific properties including toughness or sealing properties for film applications.

In some embodiments, the polyolefin may be a polypropylene. Such polypropylenes can include homopolymer polypropylene (hPP), random copolymer polypropylene (RCP), impact copolymer polypropylene (ICP) or blends thereof. Examples of polypropylenes of the present invention include Braskem FF030F2. While polypropylenes are not typically prone to sharkskin melt fracture, they can exhibit die-lip buildup and can benefit from the polymer processing aids of the current invention in reducing die lip buildup.

## The Poly(vinyl ester)

Poly(vinyl ester) or vinyl ester copolymers useful in the present invention include those represented by Formula 1:

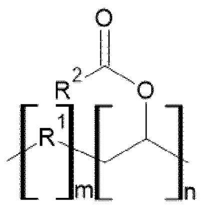

Formula 1

wherein m is zero or 1 or greater and where $R^1$ is either an alkyl group containing 1 to 12 carbon atoms or an alkyl group containing 1 to 12 carbon atoms with a polar vinyl substituent, and wherein $R^2$ is an alkyl group of 1 to 12 carbon atoms, n is greater than 1, and with the proviso that when m is 1 or greater and $R^1$ is an ethyl group the values of m and n are such that the vinyl ester content of the polymer is greater than 30 weight-%. Where $R^1$ is an alkyl group, it may be linear or branched. Preferably the alkyl group contains 1 to 6 carbon atoms.

Preferably, n + m is such that the molecular weight of the polymer is greater than 5,000 g/mol, preferably greater than 10,000 g/mol, for example greater than 50,000 g/mol, greater than 100,000 g/mol, greater than 200,000 g/mol, or greater than 300,000 g/mol.

Where m is zero in Formula 1 the chemical structure may be simplified to Formula 2, representing a poly(vinyl ester) homopolymer.

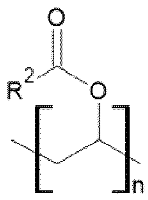

Formula 2

Examples of poly(vinyl ester) useful in the present invention include poly(vinyl acetate), poly(vinyl propionate), poly(vinyl laurate), poly(vinyl butyrate, and poly(vinyl stearate).

Poly(vinyl acetate) is a preferred poly(vinyl ester) of the present invention. PVAc is represented by Formula 3.

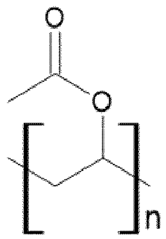

Formula 3

PVAc useful in the present invention has a molecular weight of greater than 1,000 g/mol. Suitably the PVAc may have a molecular weight of greater than 5,000 g/mol, preferably greater than 10,000 g/mol, for example greater than 50,000 g/mol, greater than 100,000 g/mol, greater than 200,000 g/mol, or greater than 300,000 g/mol. Examples of PVAc homopolymer useful in the present invention include Wacker (Germany) Vinnex 2522, Vinnex 2523, Vinnex 2525 and Vinnex 2526 as well as Synthomer (UK) M60.

In Formula 1, $R^1$ may be vinyl alcohol, vinyl butyral, dimethyl maleate, diethyl maleate, dibutyl maleate, vinyl laurate, crotonic acid ((2E)-but-2-enoic acid), a linear alkyl (such as an ethyl group) or a branched alkyl group. Where $R^1$ is an ethyl group the resulting vinyl acetate copolymer is referred to as poly(ethylene-co-vinyl acetate) or PEVA, also commonly referred to as ethylene-vinyl acetate (EVAC or EVA) copolymer and can be represented by Formula 4:

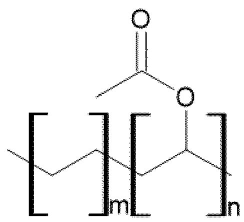

Formula 4

PEVA is available in different ranges of vinyl acetate (VA) content. PEVA copolymers with a VA content from 4 up to 28 weight-% are commonly used in polyolefin films, where they are blended with polyolefins to improve properties such as seal initiation and gloss. Such lower VA content PEVA are not included as VA copolymers useful in the present invention. PEVA copolymers with a vinyl acetate content greater than 40% and typically less than 90% are referred to ethylene-vinyl acetate rubber or EVM. Such high VA content PEVA are commonly used as adhesives or as modifiers in PVC. PEVA copolymers with a vinyl acetate content greater than 28%, for example greater than 30%, greater than 35%, greater than 40%, greater than 50%, greater than 60%, greater than 70%, greater than 80%, or greater than 90% are useful VA copolymers of the present invention. Examples of VA copolymers useful in the present invention include the high VA content PEVA grades Levamelt® 600, Levamelt 700, Levamelt 800 and Levamelt 900 available from Arlanxeo (Netherlands).

### The Polyester

Polyesters useful in the present invention include any polymer containing the ester functional group either within or across each repeat unit of the polymer backbone. This definition should be construed in a non-limiting manner and includes aliphatic and aromatic polyesters, and copolymers thereof.

The polyesters suitable for use in the present invention include those represented by Formula 6 or Formula 7:

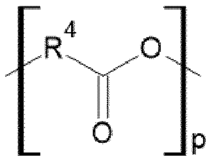

Formula 6

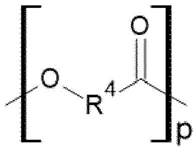

Formula 7

Wherein $R^4$ is a branched, linear or cyclic alkyl of 1 to 12 carbon atoms. The linear alkyl may preferably have 1 to 8 carbon atoms, such as 1 to 5 carbon atoms. Preferably, p is such that the molecular weight of the polymer is greater than 1000 g/mol, preferably greater than 10,000 g/mol, for example greater than 50,000 g/mol, or greater than 100,000 g/mol.

Polyesters and ester copolymers useful in the present invention include aliphatic polyesters, aromatic polyesters, and copolymers of aliphatic or aromatic esters.

Aliphatic polyesters and aliphatic ester copolymers suitable for use in the present invention include poly(lactic acid), poly(glycolic acid), polycaprolactone, poly(butylene succinate), poly(butylene co-adipate), and the various poly(hydroxyalkanoates) including poly(4-hydroxybutyrate), poly(3-hdyroxyvalerate), poly(3-hydroxybutyrate), poly(3-hydroxybutyrate-co-4-hydroxybutyrate), poly(3-hydroxybutyrate-co-3-hydroxyvalerate).

PLAs suitable for use in the present invention can be represented by Formula 8:

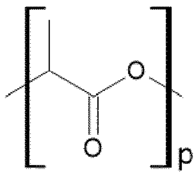

Formula 8

PLAs suitable for use in the present invention can be produced from either or both of the D-isomer or L-isomer of the lactic acid or lactide monomer. For reasons of economics, preferred PLAs of the present invention are primarily of the L-isomer. Preferred PLAs of the present invention are >80% L-isomer, more preferably >90% L-isomer and most preferably > 95% L-isomer.

Preferred PLAs suitable for use in the present invention have a Melt Flow Rate (ASTM D1238, 210°C, 2.16 kg) in the range of 0.1 to 150 g/10 min. Preferred PLAs useful as the polyester of the present invention have a MFR in the range of 0.5 to 100, for example 0.5 to 80, for example 1 to 50, for example 0.5 to 15.

Examples of PLAs useful in the present invention include Ingeo Biopolymer 3001D, 3051D, 3052D, 4043D, 4044D, 6302D, 6060D (Natureworks, Plymouth, MN USA) and Luminy L175, LX175, LX530, LX930, and LX975 (TotalEnergies Corbion, Gorinchem, The Netherlands).

In some embodiments where the polyester is a PLA, the PLA contains a minimum number of crosslinks or branches to provide an increase in viscosity, an increase in shear thinning or an increase of elasticity. Branching can be accomplished through the addition of a chain extender containing reactive functional groups such a glycidyl methacrylate ("GMA") or by radical-mediated coupling for example by a peroxide. The chain extender can be incorporated into the PPA by any means known in the art. The chain extender may be extruded with the PLA in a first extrusion step in order to provide the increase in viscosity, increase in shear thinning or increase in elasticity of the PLA. The resulting branched PLA can then be incorporated in the PPA composition of the present invention in a second step. Alternately, the chain extender can be incorporated in the PPA composition of the present invention in a single step. Examples of chain extenders of the current invention include Joncryl 4400 and Joncryl 4468 (BASF, Ludwigshafen Germany). Branching can also be accomplished via radical mediated chemistry including through the use of organic peroxides or ultraviolet radiation. Branching via radical mediated chemistry can be accomplished in a first step to generate the branched PLA prior to incorporation into the masterbatch or extrudable composition.

Poly(glycolic acid) suitable for use in the present invention can be represented by Formula 9:

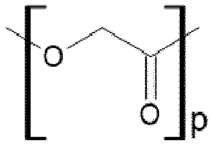

Formula 9

Preferred PGAs suitable for use in the present invention have a MFR in the range of 0.5 to 50 (2.16 kg, 250°C). More preferred PGAs suitable for use in the present invention have a MFR of 1 to 40, more preferably 5 to 30. Examples of PGAs suitable for use in the present invention include Kuredux (Kureha, Japan).

Poly(caprolactone) suitable for use in the present invention can be represented by Formula 10:

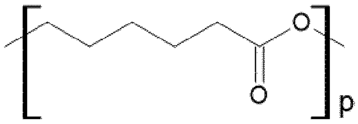

Formula 10

Preferred PCLs suitable for use in the present invention have a molecular weight greater than 1000 g/mol. More preferred PCLs suitable for use in the present invention have a molecular weight greater than 2000 g/mol, for example greater than 3000 g/mol, greater than 10,000 g/mol, or greater than 40,000 g/mol. Examples of PCL useful as the polyester in the present invention includes Capa 2403D, Capa 6500, Capa 6800 (Ingevity, North Charleston, USA).

Polyesters and ester copolymers useful in the present invention include polyhydroxyalkanoates. PHAs suitable for use in the present invention include poly(4-hydroxybutyrate) ("P4HB") represented by Formula 11, poly(3-hydroxyvalerate) ("PHV") represented by Formula 12, poly(3-hydroxybutyrate) ("P3HB") represented by Formula 13 as well as copolymers thereof including, poly(3-hydroxybutyrate-co-4-hydroxybutyrate) represented by Formula 14 and poly(3-hydroxybutyrate-co-3-hydroxyvalerate) represented by Formula 15.

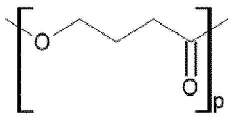

Formula 11

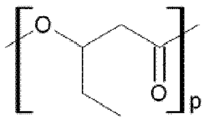

Formula 12

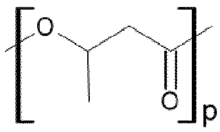

Formula 13

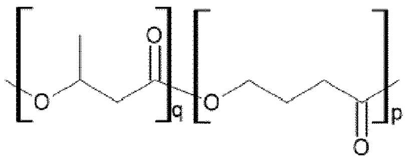

Formula 14

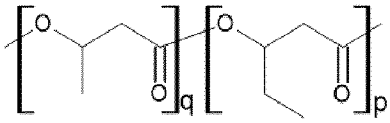

Formula 15

PHAs useful in the present invention include PHACT A1000P (CJ Biomaterials, Indonesia)

Other aliphatic ester copolymers useful as PPA components in the present invention include the alkylene glycol-dicarboxylic acid copolymers represented by Formula 16

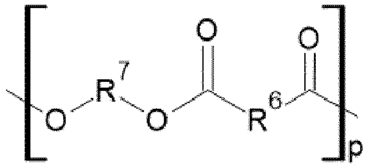

Formula 16

Where $R^6$ and $R^7$ are the same or different and are alkyl chains of 2 to 12 carbon atoms.

Examples of such alkylene glycol-dicarboxylic acid copolymers include the polyadipate copolymers including poly(ethylene adipate), poly(propylene adipate) and poly(butylene adipate). Other examples of alkylene glycol-dicarboxylic acid copolymers include the polysuccinate copolymers including poly(ethylene succinate), poly(propylene succinate), poly(butylene succinate) ("PBS") and poly(butylene succinate co-adipate) ("PBSA"). PBS useful as polyesters in the present invention include BioPBS FZ91 and BioPBS FZ71PM (PTT MCC Biochem, Thailand) as well as BG5000M (An Phat Holding, Vietnam). PBSA useful as ester copolymers in the present invention includes BioPBS FD72PM and BioPBS FD92PM (PTT MCC Biochem, Thailand).

Aromatic polyesters and aromatic ester copolymers suitable for use in the present invention include poly(ethylene terephthalate) ("PET"), poly(butylene adipate terephthalate) ("PBAT"), poly(butylene succinate-co-terephthalate) ("PBST") and poly(butylene terephthalate co-oxyalkylene). PBAT useful as the ester copolymer in the present invention includes BG1000, BG1070 (An Phat Holding, Vietnam). Poly(butylene terephthalate co-oxyalkylene) useful as the ester copolymer in the present invention include Hytrel 3078FG, Hytrel 4053FG NC010, Hytrel 4068FG, Hytrel 5553FG NC010, and Hytrel 6359FG NC010.

Particularly preferred processing aids of the invention are PVAc of 300,000 to 500,000 g/mol Mw, and a combination of PVAc of 300,000 to 500,000 g/mol Mw and PLA at a 3:1 weight ratio of PVAc: PLA.

**The Synergist**

The composition of the present invention optionally contains a synergist. The synergist of the present invention is either or both of a poly(oxyalkylene) also known as a poly(alkylene oxide), or a polymeric liquid phosphite antioxidant.

In one embodiment of the present invention the poly(oxyalkylene) is a polyethylene glycol. In a preferred embodiment of the present invention, the polyethylene glycol has a molecular weight of 1,000 to 20,000 grams/mole. In a more preferred embodiment of the present invention the polyethylene glycol has a molecular weight of 2,000 to 10,000 grams/mole. An example of polyethylene glycol useful in the present invention is Dow Carbowax 8000.

In another embodiment of the present invention the synergist is a polymeric liquid phosphite antioxidant. US Patent No. 8,563,637 and US 8,981,042 disclose polymeric liquid polyphosphites useful in the present invention. Examples of polymeric liquid phosphites useful in the present invention are Dover Chemical Corp (Dover, OH) Doverphos LGP-11 and Doverphos LGP-12.

**Boron Nitride**

The boron nitride may be present in the extrudable composition in an amount from 0.005 to 0.2 %. The boron nitride may be present in the masterbatch composition at higher concentrations of 0.2 to 10 weight-%. The boron nitride preferably has a mean particle size less than 30 microns. The boron nitride preferably has a mean particle size of less than 10 microns. An example of boron nitride useful in the present invention is Saint-Gobain CarboTherm PCTF5. The boron nitride may be used in conjunction with the synergists described above.

**Other Polymer Additives**

The compositions of the present invention may also contain additional polymer additives as are known in the art. Additional polymer additives which can be added to the composition of the present invention, include, but are not limited to hindered phenol and phosphite antioxidants, catalyst/acid neutralizers include the hydrotalcites, zinc oxide, and the metal carboxylates including calcium, zinc, potassium, magnesium, lithium and sodium stearates. Other polymer additives that can be included in the composition of the present invention include slip additives, anti-blocking additives, antistatic agents, ultraviolet light absorbers (UVAs), and hindered amine light stabilizers (HALS).

Hindered phenols are known as antioxidants for polyolefins. Hindered phenols particularly useful in the present invention include, but are not limited to:

octadecyl-(3-(3,5-di-t-butyl-4-hydroxyphenol)propionate) ("AO 1076"; CAS Number 2082-79-3), pentaerythritol tetrakis (3-(3,5-di-t-butyl-4-hydroxyphenol)propionate) ("AO 1010"; CAS Number 6683-19-8),

1,3,5-tris(4-tert-butyl-3-hydroxy-2,6-dimethylbenzyl)-1,3,5-triazine-2,4,6-(1H,3H,5H)-trione ("AO 1790"; CAS Number 40601-76-1),
1,3,5-tris(3,5-di-tert-butyl-4-hydroxybenzyl)-1,3,5-triazine-2,4,6(1h,3h,5h)-trione ("AO 3114"; CAS Number 27676-62-6), and
1,3,5-trimethyl-2,4,6-tis(3,5-di-tert-butyl-4-hydroxybenzyl)benzene ("AO 1330", CAS Number 1709-70-2).

Phosphites and phosphonites are also known as antioxidants for plastics. They are predominantly aromatic phosphites and phosphonites. Phosphites and phosphonites useful in the present invention include, but are not limited to:

tris-(2,4-di-t-butylphenyl)phosphite ("AO 168", CAS Number 31570-04-4),
bis (2,4-di-t-butylphenyl) pentaerythritol diphosphate, ("AO 626", CAS Number 26741-53-7), Tetrakis(2,4-di-tert-butylphenyl)[1,1-biphenyl]-4,4'-diylbisphosphonite ("AO PEPQ", CAS Number 38613-77-3),
bis (2,4-di-t-cumylphenyl) pentaerythritol diphosphate ("AO 9228", CAS 154862-43-8), and Phosphorous acid, mixed 2,4-bis(1,1-dimethylpropyl)phenyl and 4-(1,1-dimethylpropyl)phenyl triesters; ("AO 705", CAS 939402-02-5).

Metal carboxylates useful in the present invention include the metal stearates, including calcium stearate, zinc stearate, magnesium stearate, and lithium stearate.
Slip additives useful in the present invention include erucamide CAS Number 112-84-5) and oleamide (CAS Number 301-02-0).
Anti-blocking additives useful in the present invention include synthetic silica (CAS Number 112926-00-8), diatomaceous earth CAS Number 68855-54-9), nepheline syenite (CAS Number 37244-96-5), talc (CAS Number 14807-96-6), sodium calcium aluminosilicate hydrate (CAS Number 1344-01-0), and calcined Kaolin (CAS Number 92704-41-1).
Antistatic Additives useful in the present invention include glycerol monostearate CAS Number 31566-31-1).
UVAs useful in the present invention include 2-Hydroxy-4-(octyloxy)benzophenone ("UVA 81"; CAS Number 1843-05-6), and
2-(4,6-bis-(2,4-dimethylphenyl)-1,3,5-triazin-2-yl)-5-(octyloxy)-phenol ("UVA 1164"; CAS Number 2725-22-6).
HALS useful in the present invention include 1,3,5-tirazine-2,4,6-triamine,N,N'''-[1,2-ethanediylbis[[[4,6-bis-[butyl(1,2,2,6,6-pentamethyl-4-piperidinyl)amino]-1,3,5-triazine-2-yl]imino]-3,1-propanediyl]]bis[N',N"-bis91,2,2,6,6-pentamethyl-4-piperidinyl)- ("HALS 119"; CAS Number 106990-43-6),

Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]] ("HALS 944"; CAS Number 71878-19-8),
1,6-Hexanediamine, N, N'-bis(2,2,6,6-tetramethyl-4-piperidinyl)-polymer with 2,4,6-trichloro-1,3,5-triazine, reaction products with N-butyl-1-butanamine an N-butyl-2,2,6,6-tetramethyl-4-piperidinamine ("HALS 2020"; CAS Number 192268-64-7),
Poly [(6-morpholino-s-triazine-2,4-diyl)[2,2,6,6-tetramethyl-4-piperidyl) imino]- hexamethylene [(2,2,6,6-tetramethyl-4-piperidyl) imino]] ("HALS 3346"; CAS Number 82451-48-7), 1,6-hexanediamine, N,N'-bis(2,2,6,6-tetramethyl-4-piperidinyl)-, polymers with morpholine-2,4,6-trichloro-1,3,5-triazine ("HALS 3529",CAS Number 193098-40-7) and butanedioic acid, polymer with 4-hydroxy-2,2,6,6-tetramethyl-1-piperidineethanol ("HALS 622", CAS Number 65447-77-0).

## Theory

Poly(vinyl ester), including PVAc, is used in industry for a variety of purposes, including as an adhesive in coatings, and films, and as a component of hot-melt adhesives. It has surprisingly been found that low levels of 0.01 to 1.0% of poly(vinyl ester) or vinyl ester copolymers can act as polymer processing aids for polyolefins.
Without wishing to be constrained by theory, it is believed that the poly(vinyl ester) or vinyl ester copolymer polymer processing aids in the present invention function similarly to the fluoropolymer PPAs of the prior art. That is, the polymer processing aids coat the extrusion die wall, in particular the die exit, and induce a slip velocity between the PPA coating and the polyolefin being processed. The poly(vinyl ester) or vinyl ester copolymer based PPAs of the present invention are believed to efficiently achieve this.
It is believed that specific poly(vinyl ester) or vinyl ester copolymers can function as PPAs. By selecting specific poly(vinyl ester) or vinyl ester copolymers with specific ranges of physical and chemical properties more preferred selections of poly(vinyl ester) or vinyl ester copolymer useful as PPAs can be made. Adapting the teachings of fluoropolymer processing aids, the poly(vinyl ester) or vinyl ester copolymer based PPA should be immiscible with the polyolefin, should be able to bond to the metal or metal oxide of the extrusion die, should readily spread and form a coating layer on the metal extrusion die to form a slip layer, have a low work of adhesion with the polyolefin in order to promote slip,

and should possess sufficient thermal and chemical stability.

In order to find application in large volume food packaging applications, the PPAs should preferably also be non-migratory, suitable for food contact, and not have a large negative effect on haze or clarity of films.

The PPAs suitable for use in the invention are based on poly(vinyl ester) or vinyl ester copolymer. The ester functional groups are believed to promote bonding to the metal oxide surface of an extrusion die. Poly(vinyl acetate) and vinyl acetate copolymers are believed to have a high affinity for the die wall. In the case of a poly(ethylene-co-vinyl acetate) copolymer, it is believed that a higher vinyl acetate content provides better bonding to the extrusion die and reduced miscibility with the polyolefin matrix.

It is believed that the poly(vinyl ester) or vinyl ester copolymer should also be chosen with regards to its interfacial tension with the polyolefin. The PPAs are believed to function by promoting slip between the PPA layer on the die and the polyolefin. The critical shear rate for the onset of slip is related to the work of adhesion of the polyolefin to the PPA. The poly(vinyl ester) or vinyl ester copolymer based PPAs of the present invention are believed to have suitable properties to promote interfacial slip between the polyolefin and PPA layer.

The coating efficiency of the poly(vinyl ester) or vinyl ester copolymer based PPAs suitable for use in the present invention is believed to be a function of the molecular weight, molecular weight distribution and structure of the polyester, which affect its viscosity, shear thinning properties and elasticity. It is believed that the viscosity of the poly(vinyl ester) or vinyl ester copolymer should be similar to that of the polyolefin at the temperature and shear rate range at which it is being processed. The poly(vinyl ester) or vinyl ester copolymer should preferably be dispersed in the polyolefin in an average dispersed particle size of 0.2 to 30 microns, more preferably 0.5 to 20 microns, still more preferably 1 to 15 microns, and most preferably 1 to 10 microns at the extrusion die in order to promote efficient coating of the die wall. This particle size is achieved through a combination of the selection of a poly(vinyl ester) or vinyl ester copolymer of suitable rheological properties, through the addition of the polyester, or a synergist, a combination thereof, and processing conditions.

Thus the choice of a specific poly(vinyl ester) or vinyl ester copolymer may depend on a number of factors. The molecular weight, molecular weight distribution, structure and surface energy of the PVAc will affect the coating kinetics of the PVAc on the die. The poly(vinyl ester) or vinyl ester copolymer will have a characteristic interfacial tension and work of adhesion with the polyolefin of the composition of the present invention. The poly(vinyl ester) or vinyl ester copolymer will preferably have a low work of adhesion with the polyolefin in order to facilitate slip of the polyolefin on the PVAc based PPA which is coating the die wall.

The poly(vinyl ester) or vinyl ester copolymer should have sufficient molecular weight so that it has good thermal stability and is non-migratory in the finished polyolefin article.

The use of a polyester in combination with the poly(vinyl ester) or vinyl ester copolymer is believed, depending on the specific combination of components, to improve the performance of the PPA. The mechanism behind this improvement is not yet understood. Without wishing to be constrained by theory, it is believed, that the polyester may act as an interfacial agent, reducing the shear on the dispersed phase of the poly(vinyl ester) or vinyl ester copolymer in the polyolefin composition, and thereby help maintain an optimum particle size during processing, or it may help facilitate coating of the die by some other mechanism. In order to provide this function, it is believed that the polyester should have a viscosity under the processing conditions which is less than that of the poly(vinyl ester) or vinyl ester copolymer. The polyester should also be chosen with regards to the interfacial energies of the materials involved - i.e. the polyester or ester copolymer should preferably be chosen such that it has a tendency to wet (partially or fully encapsulate) the poly(vinyl ester) or vinyl ester copolymer when dispersed in the polyolefin. The ability of the polyester to wet the poly(vinyl ester) or vinyl ester copolymer when mixed in the polyolefin can be estimated using spreading coefficients calculated from surface energy of the materials (Kokahchi, Ahmad R; Ajji, Abdellah; Carreau, Pierre J; Surface Morphology and Properties of Ternay Polymer Blends: Effect of the Migration of Minor Components. J. Phys. Chem. B 2014, 118, 6316-6323) or determined experimentally as is known in the art. Using this method PLA is predicted to coat PVAc homopolymer in an LLDPE matrix, for example. Wetting of PVAc by the polyester (such as PLA) may be further aided where the polyester has a lower viscosity (higher MFR when measured under identical conditions) than the PVAc.

Additionally, or alternatively to the polyester, a synergist may improve the performance of the PPA. The synergist may also function as an interfacial agent to reduce the amount of shear on the poly(vinyl ester) or vinyl ester copolymer and thus maintain sufficient average particle size. In order to provide this function, the synergist should have a viscosity under the processing conditions which is less than that of the poly(vinyl ester) or vinyl ester copolymer. The polyethylene glycol useful in the present invention may perform this function. PEG is also known to work independently to reduce extrusion defects such as sharkskin melt fracture and die lines. While the polymeric liquid phosphites of the present invention are also believed to work as synergists to improve performance of the PPA, they are believed to offer an additional benefit in that they mitigate degradation of the polymer. Reduced degradation of the polyolefin is expected to reduce the frequency of crosslinked gels as well as reduce oxidized polymer on the metal surfaces of processing equipment.

**Extrudable Compositions and Masterbatches**

Extrudable compositions of the present invention are useful in polyolefin extrusion processes including blown film, cast film, sheet extrusion, extrusion blow molding, fibre spinning, and profile extrusion in reducing or eliminating melt fracture including sharkskin as described in the foregoing. As little as 0.01 to 1.0% by weight of the total composition, based on the total weight of the polyolefin composition, of the PPA is required in the extrudable polyolefin composition in order to reduce or delay melt fracture. Suitably extrudable compositions contain from 0.01 to 1.0 weight-% of the PPA, based on the total weight of the polyolefin composition, suitably in an amount of from 0.01 to 0.7 weight-%, preferably in an amount of from 0.02 to 0.5 weight-% and more preferably in an amount from 0.02 to 0.2 weight-%.

In some applications of the present invention the PPA composition includes a polyester or polyester copolymer in addition to the poly(vinyl ester) or vinyl ester copolymer. The polyester or ester copolymer is used at a weight ratio of 1:10 to 10:1 with the poly(vinyl ester) or vinyl ester copolymer, preferably at a ratio of 1:3 to 10:1, more preferably at a ratio of 1:1 to 8:1, most preferably at a ratio of 1:1 to 5:1. Where the PPA includes the polyester or ester copolymer the combination of the poly(vinyl ester) or vinyl ester copolymer and the polyester or ester copolymer is used at a concentration as low as 0.01 to 1.0 weight % of the extrudable polyolefin composition in order to reduce or delay melt fracture. Suitably extrudable compositions contain from 0.01 to 0.7% of the PPA, for example from 0.02 to 0.5%, or from 0.02 to 0.2 %.

In some applications of the present invention the PPA includes a synergist. The synergist is used at ratio of 1:10 to 10:1 with the poly(vinyl ester) or vinyl ester copolymer, preferably at a ratio of 1:5 to 5:1, more preferably at a ratio of 1:3 to 3:1. Where the PPA includes the synergist, the combination of the poly(vinyl ester) or vinyl ester copolymer, the polyester or polyester copolymer if present, and the synergist is used at a concentration as low as 0.01 to 1.0 weight % of the extrudable polyolefin composition in order to reduce or delay melt fracture. Preferred extrudable compositions contain from 0.01 to 0.7% of this combination, for example from 0.02 to 0.5%, from 0.02 to 0.2%.

In some applications of the present invention the PPA includes a boron nitride. The boron nitride is present in the extrudable composition in an amount from 0.005 to 0.2 %. The boron nitride preferably has a mean particle size less than 30 microns. The boron nitride more preferably has a mean particle size of less than 10 microns. Where the PPA includes the boron nitride, the combination of the poly(vinyl ester) or vinyl ester copolymer, the polyester or polyester copolymer if present, the synergist if present, and the boron nitride is used at a concentration as low as 0.01 to 1.0 weight % of the extrudable polyolefin composition in order to reduce or delay melt fracture. Preferred extrudable compositions contain from 0.01 to 0.7% of this combination, for example from 0.02 to 0.5%, from 0.02 to 0.2%.

Extrudable compositions of the present invention can be prepared by polyolefin producers in their post reactor pelletizing operations. Pelletizing is typically achieved by extrusion through a die via a twin-screw extruder, melt pump or similar equipment as is known in the art. Numerous techniques can be employed to introduce the PPA components, as well as other polymer additives as is known in the art to the post reactor polyolefin stream. The PPA can be dosed directly to the polyolefin stream where it is mixed into the polymer prior to pelletization. The storage, handling and dosing systems for the PPA is well known in the art. However, in some post-reactor pelletizing operations the required feeding systems may not be available, or it may be otherwise desirable to handle and feed the PPA, and optional additional additives via a masterbatch. This can be achieved by the preparation of a masterbatch of a higher concentration of the PPA and optional additional additives in a polyolefin carrier polymer.

The use of masterbatches is well known in the art. Producing a masterbatch of a higher concentration of the PPA components to be let down into the base polymer to achieve the final extrudable composition can improve the accuracy in formulating the extrudable composition. The use of a masterbatch can also allow the dosing of the PPA in combination with other polymer additives via a single masterbatch.

Compositions of the present invention useful as masterbatches for polyolefins contain from 1 to 45 weight % of the poly(vinyl ester) or vinyl ester copolymer based PPA in a polyolefin carrier polymer. In some embodiments the masterbatch is comprised of 1.5 to 40% of the PPA in a polyolefin carrier polymer. Preferred compositions useful as masterbatches contain from 2 to 30% PPA, for example 2% to 25%, for example 2 to 10%.

The polyolefin carrier polymer used in the masterbatch compositions of the present invention is compatible with the base polymer in which the masterbatch will be let down. Preferably the polyolefin carrier polymer used in the masterbatch composition is miscible with the base polymer. By way of example a polyethylene carrier is a preferred carrier polymer for a masterbatch of the present invention used to modify a polyethylene base polymer. If the base polymer is an LLDPE, then the polyethylene carrier polymer of the masterbatch is preferably a polyethylene, and more preferably an LLDPE.

The use of a masterbatch composition of the present invention allows polyolefin producers to accurately prepare extrudable compositions of the present invention and thereby sell a fully formulated polyolefin with good processing characteristics to downstream converters. The polyolefin producer may include other polymer additives in their fully formulated polyolefin. Additional polymer additives which may be included by a polyolefin producer include hindered phenol and phosphite antioxidants, catalyst/acid neutralizers including hydrotalcite, zinc oxide, and the metal carboxylates including calcium, zinc, potassium, magnesium, lithium and sodium stearates. Other polymer additives that can be

included are slip additives, anti-blocking additives, and antistatic agents. These polymer additives can optionally be included in a PPA masterbatch composition of the present invention. Inclusion of these additives in addition to the PPA of the present invention in the masterbatch may simplify or improve the handling and feeding of multiple additives to the polyolefin.

In some cases, the downstream converter such as a film producer may not want to purchase a fully formulated polyolefin. The use of a PPA masterbatch allows converters to customize the composition of a base polymer to meet the particular needs of their converting process. The masterbatch allows the converter to adjust the active level of PPA in an extrudable composition of the present invention to meet the particular requirements of individual processing equipment and products. The use of a masterbatch also allows the converter to 'shock' their system for a short period of time with higher levels of PPA to reduce the conditioning time required to remove sharkskin melt fracture.

Thus the use of a masterbatch of higher concentrations of the PPA and optional additional additives in the polyolefin compositions of the present invention are useful to both the polyolefin producer and the downstream converter.

The compositions of the present invention are differentiated from the prior art in that they are substantially fluorine free and remove, reduce the appearance of or delay the onset of sharkskin. The compositions of the present invention may offer additional benefits in polyolefin extrusion including reduced extrusion pressures, increased output and reduced die lip buildup.

## Examples

The following examples are presented for illustrative purposes only and are not intended to limit the scope of the invention.

Table 1: List of Materials

| Identifier | Manufacturer and Grade | Description |
|---|---|---|
| LLDPE1 | Exxon Mobil LL 1001X31 | Butene copolymer LLDPE, 1 MFR (190 °C, 2.16 KG), 0.918 g/cc density |
| LLDPE2 | LyondellBasell Petrothene GA502024 | Butene copolymer LLDPE, 2 MFR (190 °C, 2.16 KG), 0.918 g/cc density |
| FKM1 | 3M Dynamar FX5920A | Fluoroelastomer and PEG PPA containing a small amount of inorganic partitioning agent. |
| S1 | Dow Carbowax Sentry PEG 8000 NF Granular | Poly(ethylene)glycol 8,000 g/mol |
| S2 | Dover Chemical Doverphos LGP-12 | Liquid polymeric phosphite stabilizer |
| AO | BASF Irganox B 900 | Antioxidant blend of<br>80% Irgafos 168<br>20% Irganox 1076 |
| PLA1 | Total Energies Corbion LX 175 | MFR = 6 g/10 min (210 C, 2.16 kg) |
| PVAc1 | Wacker Vinnex 2522 | MVR = 26 cm3/10 min (100C, 21.6 kg); Mw = 65,000 g/mol.* |
| PVAc2 | Wacker Vinnex 2525 | MVR = 15.4 g/10 min (150C, 21.6 kg); Mw = 330-430,000 g/mol.* |
| * Vinnex Melt Volume Rate (MVR) and Molecular Weight (Mw) data taken from "Vinnex® - Enabling the Next Generation of Bioplastics", Wacker (Germany), https://www.wacker.com/h/medias/7002-EN.pdf. | | |

The list of materials used in the control, comparative examples and examples of the current invention are listed in Table 1.

In order to improve the accuracy of dosing of the PPAs, masterbatches were prepared according to the formulations found in Table 2. LyondellBasell Petrothene GA502024 received in pellet form was ground to a 12 Mesh top size and was used as the carrier polymer for all of the masterbatches. 6 kg of each recipe was weighed out batchwise to two decimal accuracy on a digital scale. For additives present at quantities less than 0.5 kg, mass was measured in grams to two decimal place accuracy on a digital scale. The weighed batches were tumble blended for 2 minutes if all additives were solid and high speed mixed for 5 minutes if a liquid component was present in the recipe.

The masterbatch formulations of Table 2 were fed by a loss in weight feeder to a Coperion ZSK30 corotating twin

screw extruder; equipped with a 30 mm diameter, 36 length/diameter (L/D) set of screws. A low-shear screw design was used. The ZSK30 extruder is equipped with 6 barrel sections. From the feed section to the final barrel section before the die, the barrel zones were set to temperatures of 110-140-160-170-180-180 °C. The extruder was fitted with an Econ EWA 50 pelletizer set up for underwater pelletization. The diverter valve temperature was set to 170C and the die temperature was set to 170 °C. All masterbatches were extruded at 350 RPM at a rate of approximately 18.3 kg/hr.

Table 2: Masterbatch Recipes

| Masterbatch Identifier | Masterbatch Composition | | |
|---|---|---|---|
| | PPA | AO (B900) | LLDPE2 (Carrier Polymer) |
| CMB | 3% FKM1 | 0.1% | 96.9% |
| MB1 | 10% PVAc1 | 0.1% | 89.9% |
| MB2 | 10% PVAc2 | 0.1% | 89.9% |
| MB3 | 7.5% PVAc2<br>2.5% PLA1 | 0.1% | 89.9% |

The time to eliminate surface melt fracture ("time-to-clear") in blown film extrusion was evaluated on a Lung Meng AH-42 blown film line equipped with a 42 mm single screw extruder (L/D = 24:1), a 68.58 mm diameter die with a die gap of 0.508 mm, and external bubble cooling. Exxon Mobil LL 1001X31 (LLDPE1) was used as the control polymer and as the base polymer for all comparative examples and examples of the present invention. LLDPE1 at 100% concentration was extruded under the temperature profile 150-180-185-185 °C with die temperature of 185 °C, a screw speed of 32 RPM at a rate of 9 kg per hour corresponding to an apparent shear rate of 350 $s^{-1}$. Shear rate was calculated according to the following formula:

$$\gamma_{w,a} = 6Q / (\pi D\ b^2)$$

where $\gamma_{w,a}$ is the apparent wall shear rate, Q is the volumetric flow rate, D is the average of the inside and outside diameter of the die and b is the die gap. The melt density of LLDPE1 was taken as 770 kg/$m^3$.

Under these conditions LLDPE1 was found to exhibit sharkskin melt fracture around the entire circumference of the film (i.e. 100% melt fracture).

The PPA masterbatches of Table 2 were dry mixed with LLDPE1 pellets according to the recipes in Table 3 to make extrudable compositions. The hopper of the film line extruder was allowed to run empty, and then immediately charged with the formulation to be evaluated in Table 3 and a timer was simultaneously started. The pressure before the extrusion die was measured via a pressure transducer located on the adapter between the single screw extruder and the blown film die. At 10-minute intervals the die head pressure was measured and a film sample was collected for 1 minute and the production rate was recorded in lbs. per hour. The film was laid flat on a light table in order to facilitate visual observation of the areas of the film containing sharkskin melt fracture. The melt fracture cleared in bands parallel to the machine direction. The widths of the film exhibiting melt fracture were marked and measured. The sum of the widths of areas containing sharkskin divided by the total width of the film provides the percent melt fracture. In some cases, the melt fracture exhibited decreasing intensity prior to being eliminated. Such areas of decreased intensity of melt fracture were still considered and measured as melt fracture.

After each evaluation of one of the compositions of Table 3, 15 kg of a 50% calcined diatomaceous earth masterbatch (Ingenia Polymers IP1052) was run through the film line to scour the PPA from the metal surfaces of the die and extruder. Following this purge, LLDPE1 was run through the film line for 1 hour to remove any remaining diatomaceous earth (DE) and reestablish 100% melt fracture before proceeding to the next evaluation.

The results of the control (C), comparative examples (CE1) and examples of the present invention (E1-E7) can be found in Table 3. The time-to-clear results are also graphed in Figure 1 to 3.

Table 3 Comparative and Example Formulations for Time-to-clear studies

| Ex. | MB & LDR | PPA in extrudable composition (ppm) | Melt Fracture after 1 hr. (%) | Change in output after 1 hr. (%) | $\Delta P_{die}$ after 1 hr. (%) |
|---|---|---|---|---|---|
| Control | - | None. LLDPE1 only. | 100% | 0% | |
| CE1 | 2% CMB | 600 ppm FKM1 | 0% | +26% | -23% |
| E1 | 2% MB1 | 2000 ppm PVAc1 | 0% | -6% | -20% |

(continued)

| Ex. | MB & LDR | PPA in extrudable composition (ppm) | Melt Fracture after 1 hr. (%) | Change in output after 1 hr. (%) | $\Delta P_{die}$ after 1 hr. (%) |
|---|---|---|---|---|---|
| E2 | 2% MB2 | 2000 ppm PVAc2 | 0% | +3% | -17% |
| E3 | 1% MB2 | 1000 ppm PVAc2 | 0% | +6% | No data |
| E4 | 0.5% MB2 | 500 ppm PVAc2 | 0% | +9% | No data |
| E5 | 0.25% MB2 | 250 ppm PVAc2 | 0% | +9% | No data |
| E6 | 2% MB5 | 1500 ppm PVAc2<br>500 ppm PLA1 | 0% | +21% | No data |

**Discussion of Experimental Results**

Referring to Table 3 and Figure 1 it can be observed that comparative example CE1 demonstrates the good performance of a traditional polymer processing aid consisting of fluoropolymer and polyethylene glycol for the removal of sharkskin in LLDPE. CE1 shows that a composition of 600 ppm of the FKM1 in LLDPE1, prepared via the masterbatch route (masterbatch CMB), can remove 100% of the melt fracture under the test conditions within one hour. In addition, the output is increased under the same extruder conditions (RPM) by 26% respectively, and the die head pressure reduced by 23% as compared to the output of the Control.

PVAc1 is a PVAc homopolymer with a MVR of 26 $cm^3$/10 min (100C, 21.6 kg) and Mw of 65,000 g/mol. Example E1 shows that an extrudable composition of 2000 ppm PVAc1 in LLDPE1 completely removes melt fracture within one hour. Figure 1 shows that composition E1 (2000 ppm PVAC1) clears melt fracture at a comparable rate to CE1 (600 ppm FKM1). The extrudable composition E1 also showed a decrease in extrusion pressure of 20% but showed an output decrease of 6% at constant extruder RPM. CE1 (FKM1) showed an increase in output of 26%.

PVAc2 is a PVAc homopolymer with a MVR of 15.4 $cm^3$/10 min (150C, 21.6 kg) and Mw of between 330,000 and 430,000 g/mol. Example E2 shows that an extrudable composition of 2000 ppm PVAc2 in LLDPE1 completely removes melt fracture within one hour. Figure 1 shows that composition E2 (2000 ppm PVAC2) clears melt fracture at a faster rate than CE1 (600 ppm FKM1). The extrudable composition E2 also showed a decrease in extrusion pressure of 17% and showed an output increase of 3% at constant extruder RPM.

Comparison of examples E1-E2 show that the molecular weight of the PVAc, which affects viscosity and elasticity of the PVAc, affect its performance as a PPA.

Extrudable composition of E3, E4, and E5, use the PVAc2 as the PPA at loadings of 1000, 500 and 250 ppm respectively. The results of E3-E5 can be compared with E2 to examine the effect of PVAc concentration in the extrudable composition. Referring to Table 3 and Figure 2 it can be seen that decreasing the PVAc2 loading has an incremental but small negative effect on the time to clear performance of the composition. However, at all loadings from 250 ppm to 2000 ppm PVAc2 completely clears melt fracture by 60 minutes. Moreover, decreasing the PVAc loading shows an incremental positive effect on extruder output at constant RPM. As the PVAc2 loading is reduced from 2000, to 250 ppm the output increases from 3% to 9% versus the control. The time to clear performance of PVAc2 compares very favourably with the traditional fluoroelastomer FKM1 at 600 ppm.

Extrudable composition E6 investigates the effect of PLA1 in combination with PVAc1 in the PPA composition. Referring to Example E6 in Figure 3 and Table 3 it can be seen that an extrudable composition of 1500 ppm PVAc2 and 500 ppm of PLA1 in LLDPE1 completely removes melt fracture within one hour. Figure 3 shows that composition E6 clears melt fracture at a faster rate than traditional fluoroelastomer composition CE1 (600 ppm FKM1). The extrudable composition E6 also showed an increase in output of 21% at constant extruder RPM. These values are comparable to the rate increase and pressure drop seen in CE1. It can be seen however, that the time to clear performance is not as favourable as the example E2 which has the same 2000 ppm loading of PPA comprised of PVAc2 only, with no PLA1. This indicates that replacing part of the PVAc2 in the PPA composition with PLA1 reduces the time to clear performance, but improves the specific output of the extruder.

**Claims**

**1.** A method for reducing or removing melt fracture or die lip build-up in an extrudable polyolefin extrusion process comprising using poly(vinyl ester) or vinyl ester copolymer as a polymer processing aid during extrusion, wherein the polymer processing aid is used in an amount of from 0.01 to 1.0 weight%, based on the total weight of the polyolefin composition, with the proviso that when the poly(vinyl ester) or vinyl ester copolymer is poly(ethylene-co-vinyl acetate)

the vinyl acetate content is greater than 30 weight-%.

2. Use of a poly(vinyl ester) or vinyl ester copolymer as a polymer processing aid to reduce or remove melt fracture or die lip build-up in an extrudable polyolefin composition, wherein the polymer processing aid is used in an amount of from 0.01 to 1.0 weight%, based on the total weight of the polyolefin composition, with the proviso that when the poly(vinyl ester) or vinyl ester copolymer is poly(ethylene-co-vinyl acetate) the vinyl acetate content is greater than 30 weight-%.

3. An extrudable composition comprising a polyolefin and a polymer processing aid, the polymer processing aid being present in an amount of from 0.01 to 1.0 weight-% based on the total weight of the polyolefin composition, and wherein the polymer processing aid comprises a poly(vinyl ester) or vinyl ester copolymer, with the proviso that when the poly(vinyl ester) or vinyl ester copolymer is poly(ethylene-co-vinyl acetate) the vinyl acetate content is greater than 30 weight-%.

4. A masterbatch composition comprising a polyolefin and a polymer processing aid, the polymer processing aid being present in an amount of from 1 to 45 weight-% based on the total weight of the polyolefin composition, and wherein the polymer processing aid comprises a poly(vinyl ester) or vinyl ester copolymer, with the proviso that when the poly(vinyl ester) or vinyl ester copolymer is poly(ethylene-co-vinyl acetate) the vinyl acetate content is greater than 30 weight-%.

5. The use, method or composition of any preceding claim, wherein the poly(vinyl ester) or vinyl ester copolymer, is poly(vinyl acetate) or vinyl acetate copolymer respectively.

6. The use, method or composition of any preceding claim, wherein the vinyl ester copolymer is poly(ethylene-co-vinyl acetate) with a vinyl acetate content is greater than 30 weight-%.

7. The use, method or composition of any preceding claim, wherein the processing aid further comprises a polyester or ester copolymer and wherein the poly(vinyl ester) or vinyl ester copolymer and the polyester or ester copolymer are used in a combined amount of from 0.01 to 1.0 weight%, based on the total weight of an extrudable polyolefin composition or in a combined amount of from 1 to 45 weight % of a masterbatch composition.

8. The use, method or composition of any preceding claim, wherein the polymer processing aid is substantially free of fluorine and/or substantially free of siloxane.

9. The use, method or composition of any preceding claim, wherein the poly(vinyl ester) or vinyl ester copolymer has a molecular weight of greater than 5,000 g/mol.

10. The use, method or composition of any preceding claim, wherein either the polyester or ester copolymer is poly(lactic acid) or poly(hydroxy alkanoate).

11. The use, method or composition of any of claims 7 to 10 wherein the poly(vinyl ester) or vinyl ester copolymer and the polyester or ester copolymer are present in the polymer processing aid in a ratio of from about 1:10 to about 10:1.

12. The use, method or composition as claimed in in any preceding claim further comprising a synergist selected from a poly(oxy alkylene) or a polymeric liquid phosphite antioxidant.

13. The use, method or composition as claimed in any preceding claim, wherein the polyolefin is selected from a polyethylene, including a high-density polyethylene, linear low-density polyethylene or a low-density polyethylene, or a polypropylene, including a homopolymer polypropylene, random copolymer polypropylene, or a heterophasic impact copolymer polypropylene, or a combination thereof.

14. A use, method, or composition as claimed in any of any preceding claim wherein the masterbatch composition further comprises one or more polymer additives selected from the following: hindered phenols, phosphites, metal stearates, hydrotalcites, zinc oxide, slip, anti-blocking, anti-static additives, ultraviolet light absorbers, hindered amine light stabilizers, and combinations thereof, wherein the one or more polymer additives are present in a combined amount of from 5 to 95 weight %, based on the total weight of the polyolefin composition.

15. An extruded polyolefin product whenever produced using the composition, method or uses of any of claims 1 to 14.

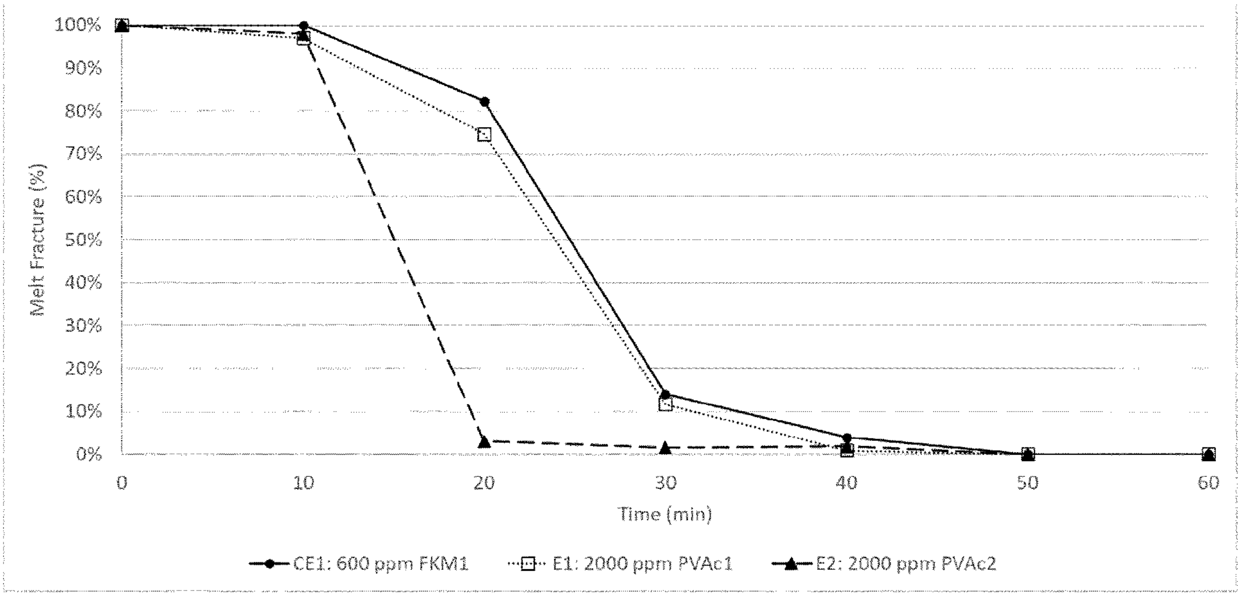

100%
90%
80%
70%
60%
50%
40%
30%
20%
10%
0%
Melt Fracture (%)
0
10
20
30
40
50
60
Time (min)
CE1: 600 ppm FKM1
E1: 2000 ppm PVAc1
E2: 2000 ppm PVAc2


Fig. 1

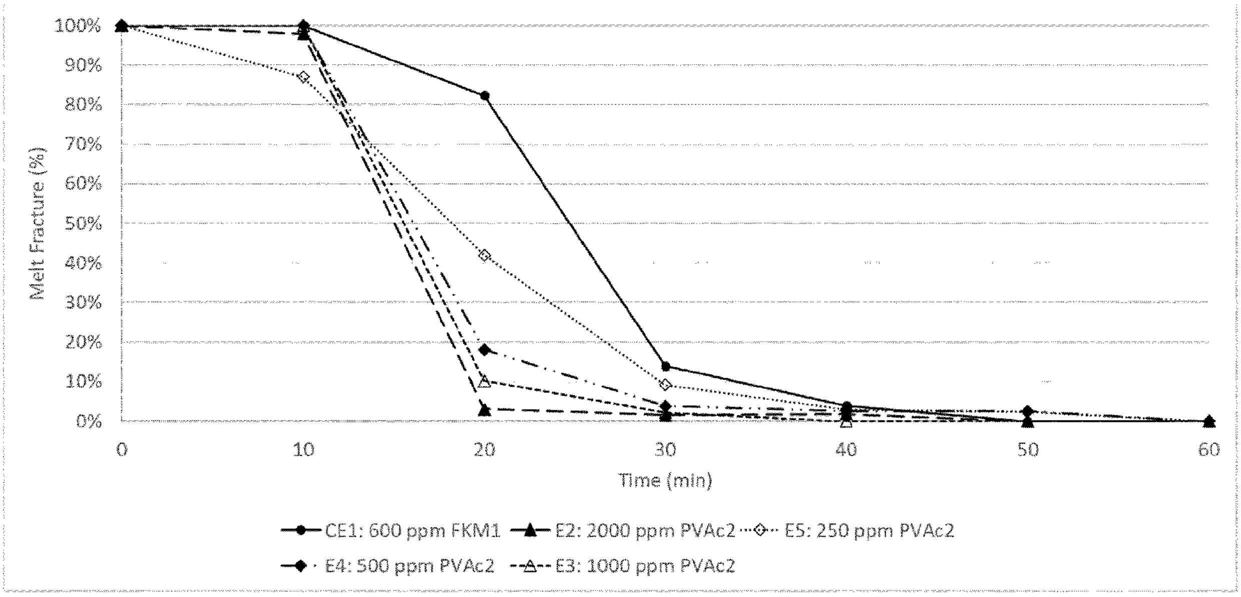
100%
90%
80%
70%
60%
50%
40%
30%
20%
10%
0%
Melt Fracture (%)
0
10
20
30
40
50
60
Time (min)
CE1: 600 ppm FKM1
E2: 2000 ppm PVAc2
E5: 250 ppm PVAc2
E4: 500 ppm PVAc2
E3: 1000 ppm PVAc2

Fig. 2

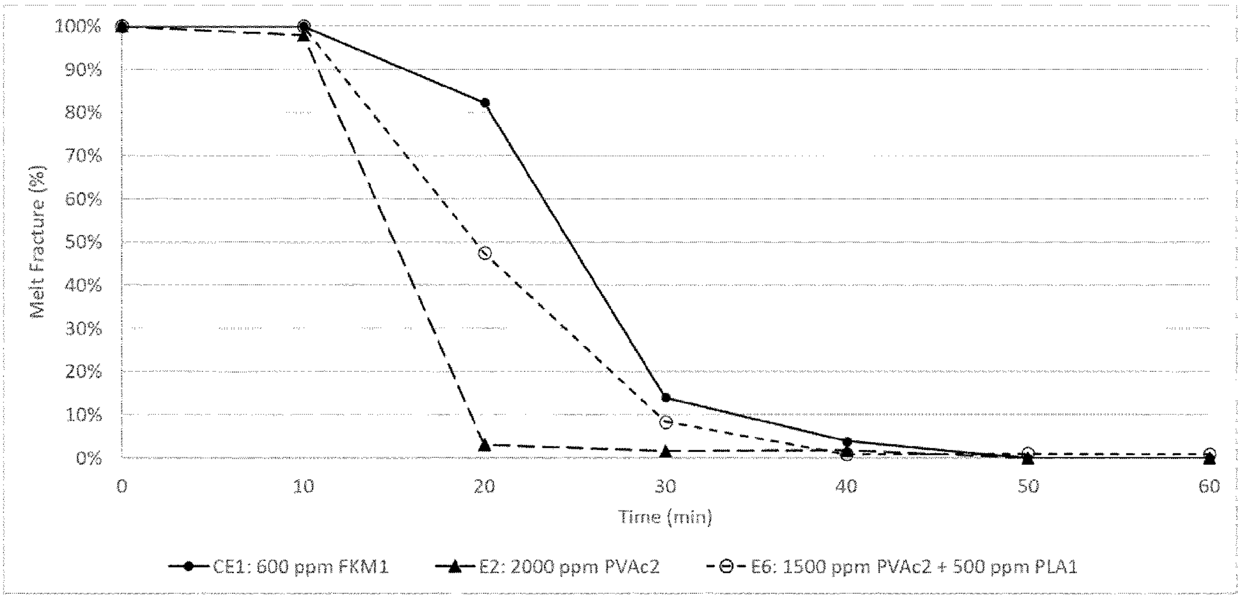
100%
90%
80%
70%
60%
50%
40%
30%
20%
10%
0%
Melt Fracture (%)
0
10
20
30
40
50
60
Time (min)
CE1: 600 ppm FKM1
E2: 2000 ppm PVAc2
E6: 1500 ppm PVAc2 + 500 ppm PLA1

Fig. 3

Europäisches Patentamt
European Patent Office
Office européen des brevets

# EUROPEAN SEARCH REPORT

Application Number
EP 23 18 9782

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 95/21887 A1 (DU PONT [US]) 17 August 1995 (1995-08-17)<br>* claims 1,4,9,12,14,16,18 *<br>* page 6, line 35 - page 7, line 9 * | 1-15<br>1-15 | INV.<br>B29C48/92 |
| X | CN 107 236 166 A (CGN ADVANCED MAT GROUP CO LTD) 10 October 2017 (2017-10-10)<br>* abstract * | 4 | |
| Y,D | US 4 855 360 A (DUCHESNE DENIS [CA] ET AL) 8 August 1989 (1989-08-08)<br>* claims 1,15 *<br>* column 1, line 5 - line 14 *<br>* column 2, line 1 - line 55 * | 1-15 | |
| Y | US 2020/308379 A1 (ROUSSEAUX DIMITRI [BE] ET AL) 1 October 2020 (2020-10-01)<br>* claims 16,19,28,29 * | 3,4,14, 15 | |

TECHNICAL FIELDS SEARCHED (IPC)

B29C
C08L

The present search report has been drawn up for all claims

1

| Place of search | Date of completion of the search | Examiner |
|---|---|---|
| Munich | 17 January 2024 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 18 9782

This annex lists the patent family members relating to the patent documents cited in the above-mentioned European search report. The members are as contained in the European Patent Office EDP file on
The European Patent Office is in no way liable for these particulars which are merely given for the purpose of information.

17-01-2024

| Patent document cited in search report | Publication date | Patent family member(s) | Publication date |
|---|---|---|---|
| WO 9521887 A1 | 17-08-1995 | AU 686342 B2 | 05-02-1998 |
| | | BR 9506994 A | 16-09-1997 |
| | | CN 1140460 A | 15-01-1997 |
| | | EP 0745105 A1 | 04-12-1996 |
| | | JP 3688709 B2 | 31-08-2005 |
| | | JP H09510238 A | 14-10-1997 |
| | | KR 970701235 A | 17-03-1997 |
| | | US 5707569 A | 13-01-1998 |
| | | WO 9521887 A1 | 17-08-1995 |
| CN 107236166 A | 10-10-2017 | CN 104927176 A | 23-09-2015 |
| | | CN 107236166 A | 10-10-2017 |
| | | CN 107236182 A | 10-10-2017 |
| US 4855360 A | 08-08-1989 | AU 619820 B2 | 06-02-1992 |
| | | CA 1339520 C | 28-10-1997 |
| | | JP 2788749 B2 | 20-08-1998 |
| | | JP H0270737 A | 09-03-1990 |
| | | KR 890016116 A | 28-11-1989 |
| | | US 4855360 A | 08-08-1989 |
| US 2020308379 A1 | 01-10-2020 | EP 3691988 A1 | 12-08-2020 |
| | | US 2020308379 A1 | 01-10-2020 |
| | | WO 2019068825 A1 | 11-04-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3125547 A
- US 4855360 A
- US 6642310 B
- US 4535113 A
- US 5789473 A
- US 10982079 B2
- US 2023003100 A1
- US 8563637 B
- US 8981042 B


### Non-patent literature cited in the description


- **HATZIKIRIAKOS, S. G.** ; **MIGLER, K. B.** Polymer Processing Additives for Melt Fracture Control. *Applied Polymer Rheology: Polymeric Fluids with Industrial Applications*, 2012, 29-58
- *CHEMICAL ABSTRACTS*, 25322-68-3
- *CHEMICAL ABSTRACTS*, 24980-41-4
- Compendium of Polymer Terminology and Nomenclature, IUPAC Recommendations. RSC Publishing, 2008
- *CHEMICAL ABSTRACTS*, 2082-79-3
- *CHEMICAL ABSTRACTS*, 6683-19-8
- *CHEMICAL ABSTRACTS*, 40601-76-1
- *CHEMICAL ABSTRACTS*, 27676-62-6
- *CHEMICAL ABSTRACTS*, 1709-70-2
- *CHEMICAL ABSTRACTS*, 31570-04-4
- *CHEMICAL ABSTRACTS*, 26741-53-7
- *CHEMICAL ABSTRACTS*, 38613-77-3
- *CHEMICAL ABSTRACTS*, 154862-43-8
- *CHEMICAL ABSTRACTS*, 939402-02-5
- *CHEMICAL ABSTRACTS*, 112-84-5
- *CHEMICAL ABSTRACTS*, 301-02-0
- *CHEMICAL ABSTRACTS*, 112926-00-8
- *CHEMICAL ABSTRACTS*, 68855-54-9
- *CHEMICAL ABSTRACTS*, 37244-96-5
- *CHEMICAL ABSTRACTS*, 14807-96-6
- *CHEMICAL ABSTRACTS*, 1344-01-0
- *CHEMICAL ABSTRACTS*, 92704-41-1
- *CHEMICAL ABSTRACTS*, 31566-31-1
- *CHEMICAL ABSTRACTS*, 1843-05-6
- *CHEMICAL ABSTRACTS*, 2725-22-6
- *CHEMICAL ABSTRACTS*, 106990-43-6
- *CHEMICAL ABSTRACTS*, 71878-19-8
- *CHEMICAL ABSTRACTS*, 192268-64-7
- *CHEMICAL ABSTRACTS*, 82451-48-7
- *CHEMICAL ABSTRACTS*, 193098-40-7
- *CHEMICAL ABSTRACTS*, 65447-77-0
- **KOKAHCHI, AHMAD R** ; **AJJI, ABDELLAH** ; **CARREAU, PIERRE J**. Surface Morphology and Properties of Ternay Polymer Blends: Effect of the Migration of Minor Components. *J. Phys. Chem. B*, 2014, vol. 118, 6316-6323